# EUROPEAN PATENT APPLICATION

(11) **EP 4 414 976 A1**
(43) Date of publication of application: **14.08.2024**
(21) Application number: 22932417.3
(22) Date of filing: 20.12.2022
(51) Int. Cl.: G10L 15/22, G10L 15/04, G10L 15/183, G10L 15/26, G10L 15/18, G06F 40/30, G06F 40/56, G06F 3/16

(54) **METHOD AND ELECTRONIC DEVICE FOR PROCESSING USER UTTERANCE BASED ON AUGMENTED SENTENCE CANDIDATES**

(30) Priority: 18.03.2022 KR 20220034180; 11.05.2022 KR 20220057653
(71) Applicant: Samsung Electronics Co., Ltd., Suwon-si, Gyeonggi-do 16677 (KR)
(72) Inventor: PARK, Sangmin, Suwon-si, Gyeonggi-do 16677 (KR); YEO, Jaeyung, Suwon-si, Gyeonggi-do 16677 (KR); SONG, Gajin, Suwon-si, Gyeonggi-do 16677 (KR)
(74) Representative: Nederlandsch Octrooibureau
(86) International application number: PCT/KR2022/020837
(87) International publication number: WO 2023/177051

(57) **Abstract**

An electronic device is provided. The electronic device includes a memory including instructions and a processor electrically connected to the memory and executing the instructions, in which, when the instructions are executed by the processor, the processor obtains intent information corresponding to an utterance of a user, calculates a reliability of the intent information, generates one or more augmented sentence candidates including at least a portion of the utterance based on one or more language models in response to the reliability being less than a threshold value, and provides a response to the user based on the augmented sentence candidates.

## Description

### Technical Field

The disclosure relates to a method and an electronic device for processing a user's utterance based on augmented sentence candidates.

### Description of Related Art

An electronic device equipped with a voice assistant function providing a service based on a user's utterance is provided in various ways. The electronic device may recognize a user's utterance through an artificial intelligence (Al) server and understand the meaning and intent of the utterance. The AI server may infer the user's intent by interpreting the user's utterance, and perform a task based on the inferred intent. The Al server may perform the task according to the user's intent represented through a natural language interaction between a user and the AI server.

The above information is presented as background information only to assist with an understanding of the disclosure. No determination has been made, and no assertion is made, as to whether any of the above might be applicable as prior art with regard to the disclosure.

### Disclosure of the Invention

### Technical Solution

In general, a user may utter a sentence including an object and a verb, for example, "Tell me the weather" or "Turn on Wi-Fi," to allow an electronic device equipped with a voice assistant function to perform a certain function. However, in some cases, a user may utter a grammatically incomplete sentence that is, for example, a sentence including only a noun or a verb, such as, for example, "hot pot soup," "air conditioner," and "must be nice (MBN)." Also, in some cases, a user may utter a sentence including a homonym.

When a user utters a sentence with an unclear intent (e.g., a grammatically incomplete sentence or a sentence including a homonym), the electronic device may determine that an intent of the utterance is not clear, and may not provide a response or may request the user to speak again. Thus, there is a desire for a technology for processing a user's utterance of which an intent is unclear.

An aspect of the disclosure is to provide a technology for providing a response to a user based on one or more augmented sentence candidates generated from an utterance with an unclear intent.

In accordance with an aspect of the disclosure, an electronic device is provided. The electronic device includes a memory including instructions and a processor electrically connected to the memory and configured to execute the instructions. When the instructions are executed by the processor, the processor may obtain intent information corresponding to an utterance of a user, calculate a reliability of the intent information, generate one or more augmented sentence candidates including at least a portion of the utterance using one or more language models in response to the reliability being less than a threshold value, and provide a response to the user based on the augmented sentence candidates.

In accordance with another aspect of the disclosure, an operation method of an electronic device is provided. The operation method includes obtaining intent information corresponding to an utterance of a user, calculating a reliability of the intent information, generating one or more augmented sentence candidates including at least a portion of the utterance based on one or more language models in response to the reliability being less than a threshold value, and providing a response to the user based on the augmented sentence candidates.

### Effects

An aspect of the disclosure is to provide a response to a user even when an utterance with an unclear intent is received from the user and improve the performance associated with a user's experience.

Another aspect of the disclosure is to generate one or more augmented sentence candidates from an utterance with an unclear intent based on one or more language models (e.g., a language model with a user history applied and a language model with a social trend applied) and provide a response to a user based on the augmented sentence candidates.

Another aspect of the disclosure is to perform a task corresponding to an utterance with an unclear intent, and output a response generated based on an augmented sentence to a user and assist the user in understanding the performed task.

Other aspects, advantages, and salient features of the disclosure will become apparent to those skilled in the art from the following detailed description, which, taken in conjunction with the annexed drawings, discloses embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram illustrating an example electronic device in a network environment according to an embodiment of the disclosure;
FIG. 2 is a block diagram illustrating an example integrated intelligent system according to an embodiment of the disclosure;
FIG. 3 is a diagram illustrating an example form in which concept and action relationship information is stored in a database (DB) according to an embodiment of the disclosure;
FIG. 4 is a diagram illustrating example screens showing an electronic device processing a received voice input through an intelligent application (app) according to an embodiment of the disclosure;
FIGS. 5A and 5B are diagrams illustrating an example of processing a user's utterance by an electronic device according to embodiments of the disclosure;
FIG. 6 is a block diagram illustrating an example electronic device according to an embodiment of the disclosure;
FIG. 7 is a diagram illustrating an example operation method of an electronic device according to an embodiment of the disclosure;
FIGS. 8A and 8B are diagrams illustrating an example of processing a user's utterance by an electronic device according to embodiments of the disclosure;
FIGS. 9A, 9B, 9C, and 9D are diagrams illustrating an example of processing a user's utterance by an electronic device according to embodiments of the disclosure; and
FIG. 10 is a flowchart illustrating an example operation method of an electronic device according to an embodiment of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

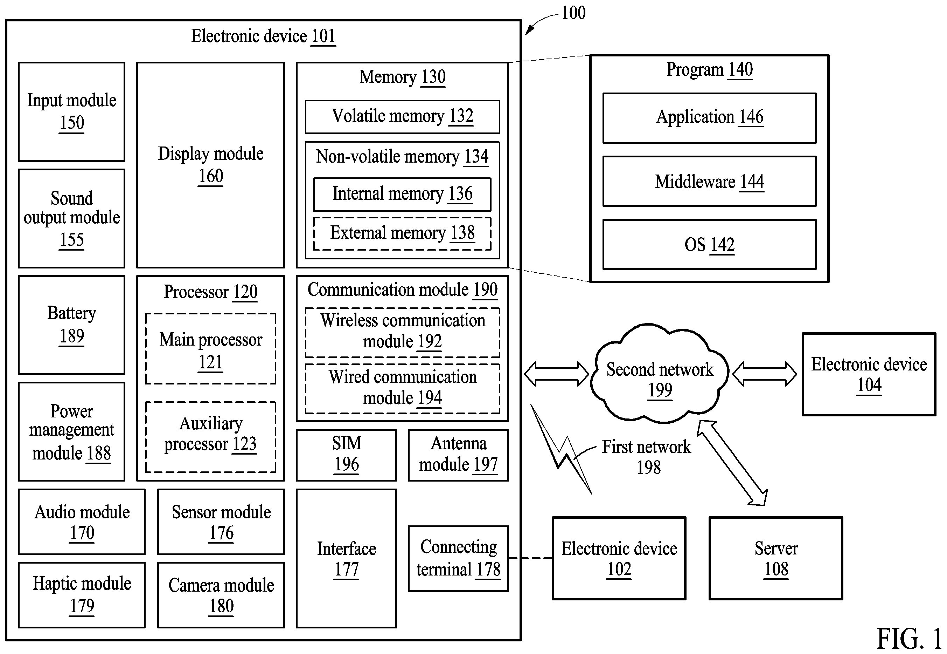

FIG. 1 is a block diagram illustrating an example electronic device in a network environment according to an embodiment of the disclosure.

Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In embodiments, at least one (e.g., the connecting terminal 178) of the above components may be omitted from the electronic device 101, or one or more other components may be added to the electronic device 101. In embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence (AI) model processing. An AI model may be generated by machine learning. The machine learning may be performed by, for example, the electronic device 101, in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry for controlling a corresponding one of the display, the hologram device, and the projector. According to an embodiment, the display module 160 may include a touch sensor adapted to sense a touch, or a pressure sensor adapted to measure an intensity of a force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with an external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and an external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a millimeter wave (mmWave) band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to embodiments, the antenna module 197 may form a mmWave antenna module. According to an embodiment, the mmWave antenna module may include a PCB, an RFIC on a first surface (e.g., a bottom surface) of the PCB, or adjacent to the first surface of the PCB and capable of supporting a designated high-frequency band (e.g., a mmWave band), and a plurality of antennas (e.g., an antenna array) disposed on a second surface (e.g., a top or a side surface) of the PCB, or adjacent to the second surface of the PCB and capable of transmitting or receiving signals in the designated high-frequency band.

At least some of the above-described components may be coupled mutually and exchange signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 and 104) may be a device of the same type as or a different type from the electronic device 101. According to an embodiment, some or all the operations to be executed by the electronic device 101 may be executed by one or more of the external electronic devices (e.g., the electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a part of the function or service. The one or more external electronic devices receiving the request may perform the at least part of the function or service requested, or an additional function or an additional service related to the request, and may transfer a result of the performance to the electronic device 101. The electronic device 101 may provide the result, with or without further processing of the result, as at least a part of a response to the request. To that end, cloud computing, distributed computing, mobile edge computing (MEC), or client-server computing technology may be used, for example. The electronic device 101 may provide ultra-low latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

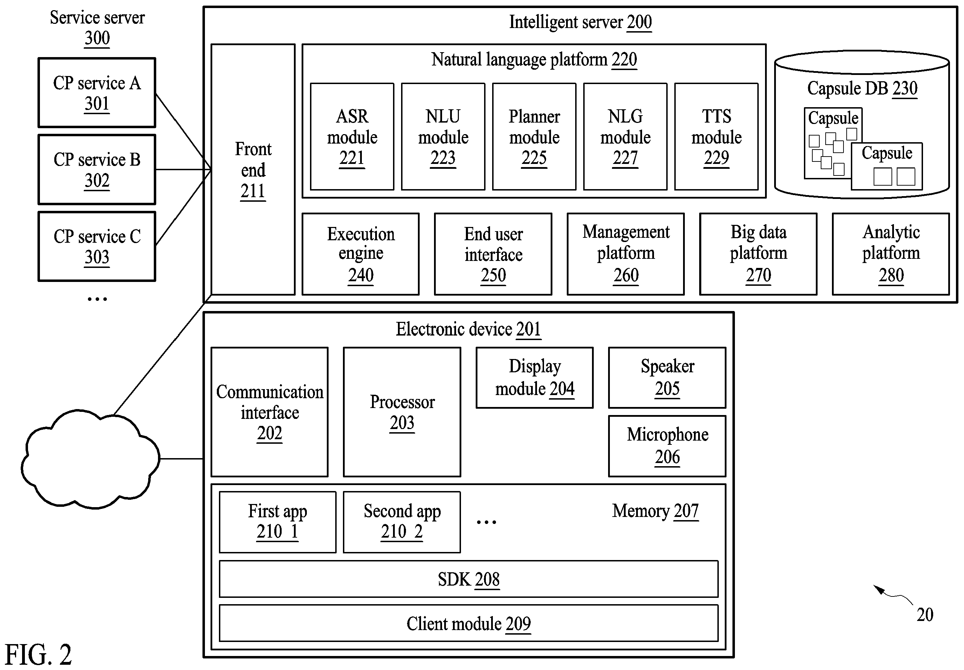

FIG. 2 is a block diagram illustrating an example integrated intelligent system according to an embodiment of the disclosure.

Referring to FIG. 2, according to an embodiment, an integrated intelligent system 20 may include an electronic device 201 (e.g., the electronic device 101 of FIG. 1), an intelligent server 200 (e.g., the server 108 of FIG. 1), and a service server 300 (e.g., the server 108 of FIG. 1).

The electronic device 201 may be a terminal device that is connectable to the Internet, for example, a mobile phone, a smartphone, a personal digital assistant (PDA), a laptop computer, a television (TV), a white home appliance, a wearable device, a head-mounted display (HMD), or a smart speaker.

As illustrated, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), a memory 207 (e.g., the memory 130 of FIG. 1), or a processor 203 (e.g., the processor 120 of FIG. 1). The components listed above may be operationally or electrically connected to each other.

The communication interface 202 may be connected to an external device to transmit and receive data to and from the external device. The microphone 206 may receive sound (e.g., an utterance from a user) and convert the sound into an electrical signal. The speaker 205 may output the electrical signal as sound (e.g., voice).

The display module 204 may display an image or video. The display module 204 may also display a graphical user interface (GUI) of an application (app) (or an application program) being executed. The display module 204 may receive a touch input through a touch sensor. For example, the display module 204 receives a text input through the touch sensor in an on-screen keyboard area displayed on the display module 204.

The memory 207 may store therein a client module 209, a software development kit (SDK) 208, and a plurality of apps 210. The client module 209 and the SDK 208 may configure a framework (or a solution program) for performing general-purpose functions. In addition, the client module 209 or the SDK 208 may configure a framework for processing a user input (e.g., a voice input, a text input, and a touch input).

The apps 210 stored in the memory 207 may be programs for performing predetermined functions. The apps 210 may include a first app 210_1, a second app 210_2, and the like. The apps 210 may each include a plurality of actions for performing the predetermined functions. For example, the apps 210 includes an alarm app, a messaging app, and/or a scheduling app. The apps 210 may be executed by the processor 203 to sequentially execute at least a portion of the actions.

The processor 203 may control the overall operation of electronic device 201. For example, the processor 203 may be electrically connected to the communication interface 202, the microphone 206, the speaker 205, and the display module 204 to perform any of the predetermined operations.

The processor 203 may also perform a predetermined function by executing a program stored in the memory 207. For example, the processor 203 executes at least one of the client module 209 or the SDK 208 to perform the following operations for processing a user input. For example, the processor 203 controls the actions of the apps 210 through the SDK 208. The following operations described as operations of the client module 209 or the SDK 208 may be operations to be performed by the execution of the processor 203.

The client module 209 may receive a user input. For example, the client module 209 receives a voice signal corresponding to a user's utterance input through the microphone 206. Alternatively, the client module 209 may receive a touch input, input through the display module 204. Alternatively, the client module 209 may receive a text input, input through a keyboard or an on-screen keyboard. The client module 209 may also receive, as non-limiting examples, various types of user inputs input through an input module included in the electronic device 201 or an input module connected to the electronic device 201. The client module 209 may transmit the received user input to the intelligent server 200. The client module 209 may transmit, to the intelligent server 200, state information of the electronic device 201 along with the received user input. The state information may be, for example, app execution state information indicating a state of execution of an app.

The client module 209 may also receive a result corresponding to the received user input. For example, when the intelligent server 200 is able to calculate the result corresponding to the received user input, the client module 209 receives the result corresponding to the received user input. The client module 209 may display the received result on the display module 204 and output the received result in audio through the speaker 205.

The client module 209 may receive a plan corresponding to the received user input. The client module 209 may display, on the display module 204, the results of executing a plurality of actions of an app according to the plan. For example, the client module 209 sequentially displays the results of executing the actions on the display module 204 and output the results in audio through the speaker 205. For another example, electronic device 201 may display only a result of executing a portion of the actions (e.g., a result of executing the last action) on the display module 204 and output the result in audio through the speaker 205.

The client module 209 may receive, from the intelligent server 200, a request for information required to calculate the result corresponding to the user input. The client module 209 may transmit the required information to the intelligent server 200 in response to the request.

The client module 209 may transmit information on the results of executing the actions according to the plan to the intelligent server 200. The intelligent server 200 may verify that the received user input has been correctly processed using the information.

The client module 209 may include a voice recognition module. The client module 209 may recognize a voice input for performing a limited function through the voice recognition module. For example, the client module 209 executes an intelligent app for processing a voice input to perform an organic action through a set input (e.g., Wake up!).

The intelligent server 200 may receive information related to a user's voice input from the electronic device 201 through a communication network. The intelligent server 200 may change data related to the received voice input into text data. The intelligent server 200 may generate a plan for performing a task corresponding to the voice input based on the text data.

The plan may be generated by an artificial intelligence (AI) system. The AI system may be a rule-based system or a neural network-based system (e.g., a feedforward neural network (FNN) or a recurrent neural network (RNN)). Alternatively, the AI system may be a combination thereof or another AI system. The plan may be selected from a set of predefined plans or may be generated in real time in response to a request from a user. For example, the AI system selects at least one plan from among the predefined plans.

The intelligent server 200 may transmit a result according to the generated plan to the electronic device 201 or transmit the generated plan to the electronic device 201. The electronic device 201 may display the result according to the plan on the display module 204. The electronic device 201 may display, on the display module 204, a result of executing an action according to the plan.

The intelligent server 200 may include a front end 211, a natural language platform 220, a capsule database (DB) 230, an execution engine 240, an end user interface 250, a management platform 260, a big data platform 270, or an analytic platform 280.

The front end 211 may receive a user input from the electronic device 201. The front end 211 may transmit a response corresponding to the user input.

The natural language platform 220 may include at least one of an automatic speech recognition (ASR) module 221, a natural language understanding (NLU) module 223, a planner module 225, a natural language generator (NLG) module 227, or a text-to-speech (TTS) module 229.

The ASR module 221 may convert a voice input received from the electronic device 201 into text data. The NLU module 223 understands a user's intention (or intent herein) using the text data of the voice input. For example, the NLU module 223 understands the user's intent by performing a syntactic or semantic analysis on a user input in the form of text data. The NLU module 223 may understand semantics of a word extracted from the user input using a linguistic feature (e.g., a syntactic element) of a morpheme or phrase and determine the intent by matching the semantics of the word to the intent. The NLU module 223 may obtain intent information corresponding to a user's utterance. The intent information may be information indicating a user's intent that is determined through an analysis of text data. The intent information may also be information indicating an operation or function the user desires to execute using a device.

The planner module 225 may generate a plan using the intent determined by the NLU module 223 and a parameter. The planner module 225 determines a plurality of domains required to perform a task based on the determined intent. The planner module 225 may determine a plurality of actions included in each of the domains determined based on the intent. The planner module 225 may determine a parameter required to execute the determined actions or a resulting value output by the execution of the actions. The parameter and the resulting value may be defined as a concept of a predetermined form (or class). Accordingly, a plan may include a plurality of actions and a plurality of concepts determined by a user's intent. The planner module 225 may determine a relationship between the actions and the concepts stepwise (or hierarchically). For example, the planner module 225 determines an order of executing the actions determined based on the user's intent, based on the concepts. That is, the planner module 225 may determine the order of executing the actions based on the parameter required for the execution of the actions and the result output by the execution of the actions. Accordingly, the planner module 225 may generate the plan including connection information (e.g., ontology) between the actions and the concepts. The planner module 225 may generate a plan using information stored in the capsule DB 230 that stores therein a set of relationships between concepts and actions.

The NLG module 227 may change predetermined information into a text form. The information changed into the text form may be provided in the form of an utterance in a natural language. The TTS module 229 may change the information in the text form into information in a voice (or speech) form.

According to an embodiment, some or all of the functions of the natural language platform 220 may also be implemented in the electronic device 201.

The capsule DB 230 may store therein information associated with relationships between a plurality of concepts and a plurality of actions corresponding to a plurality of domains. A capsule described herein may include a plurality of action objects (or action information) and concept objects (or concept information) included in a plan. The capsule DB 230 may store a plurality of capsules in the form of a concept-action network (CAN). The capsules may be stored in a function registry included in the capsule DB 230.

The capsule DB 230 may include a strategy registry that stores therein strategy information required to determine a plan corresponding to a user input (e.g., a voice input). In a case in which there are a plurality of plans corresponding to the user input, the strategy information may include reference information for determining a single plan. The capsule DB 230 may include a follow-up registry that stores therein information associated with follow-up actions for suggesting a follow-up action to a user in a corresponding predetermined situation. The follow-up action may include, for example, a follow-up utterance (or a subsequent utterance herein). The capsule DB 230 may include a layout registry that stores therein layout information associated with a layout of information output through the electronic device 201. The capsule DB 230 may include a vocabulary registry that stores therein vocabulary information included in capsule information. The capsule DB 230 may include a dialog registry that stores therein information associated with a dialog (or an interaction) with a user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with a user. The developer tool may include a follow-up editor for activating a follow-up objective and editing a follow-up utterance that provides a hint. The follow-up objective may be determined based on a currently set objective, a user's preference, or an environmental condition. The capsule DB 230 may also be implemented in the electronic device 201.

The execution engine 240 may calculate a result using a generated plan. The end user interface 250 may transmit the calculated result to the electronic device 201. Accordingly, the electronic device 201 receives the result and provide the received result to a user. The management platform 260 may manage information used by the intelligent server 200. The big data platform 270 may collect data of the user. The analytic platform 280 may manage a quality of service (QoS) of the intelligent server 200. For example, the analytic platform 280 manages the components and a processing rate (or efficiency) of the intelligent server 200.

The service server 300 may provide a preset service (e.g., food ordering or hotel reservation) to the electronic device 201 via CP service A 301, CP service B 302, and/or CP service 303. The service server 300 may be a server operated by a third party. The service server 300 may provide the intelligent server 200 with information to be used for generating a plan corresponding to a received user input. The provided information may be stored in the capsule DB 230. In addition, the service server 300 may provide the intelligent server 200 with resulting information according to the plan.

In the integrated intelligent system 20 described above, the electronic device 201 may provide various intelligent services to a user in response to a user input from the user. The user input may include, for example, an input made through a physical button, a touch input, or a voice input.

The electronic device 201 may provide a voice (or speech) recognition service through an intelligent app (or a voice/speech recognition app) stored therein. In this case, the electronic device 201 may recognize a user utterance or a voice input received from a user through the microphone 206 and provide the user with a service corresponding to the recognized voice input.

The electronic device 201 may perform a predetermined action alone or together with at least one of the intelligent server 200 or the service server 300 based on the received voice input. For example, the electronic device 201 executes an app corresponding to the received voice input and perform the action through the executed app.

When the electronic device 201 provides the service together with at least one of the intelligent server 200 or the service server 300, the electronic device 201 may detect a user utterance using the microphone 206 and generate a signal (or voice data) corresponding to the detected user utterance. The electronic device 201 may transmit the voice data to the intelligent server 200 using the communication interface 202.

In response to the voice input received from the electronic device 201, the intelligent server 200 may generate a plan for performing a task corresponding to the voice input or a result of performing an action according to the plan. The plan may include, for example, a plurality of actions for performing the task corresponding to the voice input of the user, and a plurality of concepts related to the actions. The concepts may define parameters input to the execution of the actions or resulting values output by the execution of the actions. The plan may include connection information (e.g., ontology) between the actions and the concepts.

The electronic device 201 may receive a response using the communication interface 202. The electronic device 201 may output a voice signal generated in the electronic device 201 to the outside using the speaker 205, or output an image generated in the electronic device 201 to the outside using the display module 204.

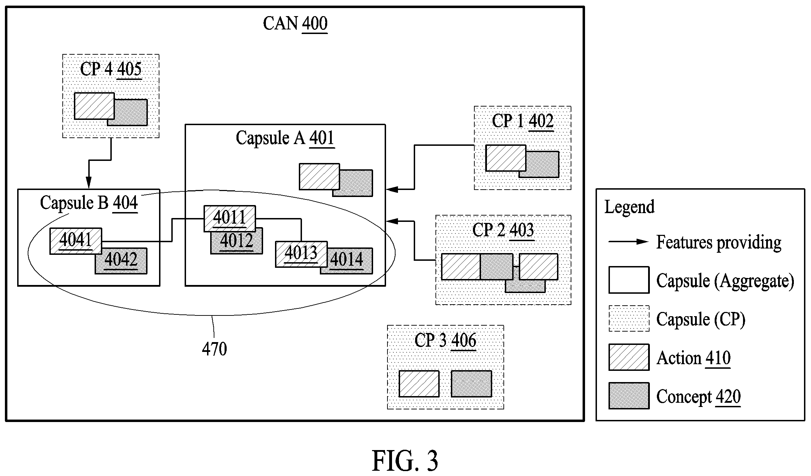

FIG. 3 is a diagram illustrating an example form in which concept and action relationship information is stored in a DB according to an embodiment of the disclosure.

Referring to FIG. 3, a capsule DB (e.g., the capsule DB 230 of FIG. 2) of an intelligent server (e.g., the intelligent server 200 of FIG. 2) may store therein capsules in the form of a concept action network (CAN) 400. The capsule DB may store, in the form of the CAN 400, actions for processing a task corresponding to a voice input of a user and parameters necessary for the actions.

The capsule DB may store a plurality of capsules, for example, a capsule A 401 and a capsule B 404, respectively corresponding to a plurality of domains (e.g., apps). One capsule (e.g., the capsule A 401) may correspond to one domain (e.g., a location (geo) app). In addition, one capsule may correspond to at least one service provider (e.g., CP1 402 or CP2 403) for performing a function for a domain related to the capsule. One capsule may include at least one action 410 and at least one concept 420 for performing a preset function. The CAN 400 may also include CP 4 405 and CP 3 406.

A natural language platform (e.g., the natural language platform 220 of FIG. 2) may generate a plan for performing a task corresponding to a received voice input using the capsules stored in the capsule DB. For example, a planner module (e.g., the planner module 225 of FIG. 2) of the natural language platform generates the plan using the capsules stored in the capsule DB. For example, the planner module generates a plan 470 using actions 4011 and 4013 and concepts 4012 and 4014 of the capsule A 401 and using an action 4041 and a concept 4042 of the capsule B 404.

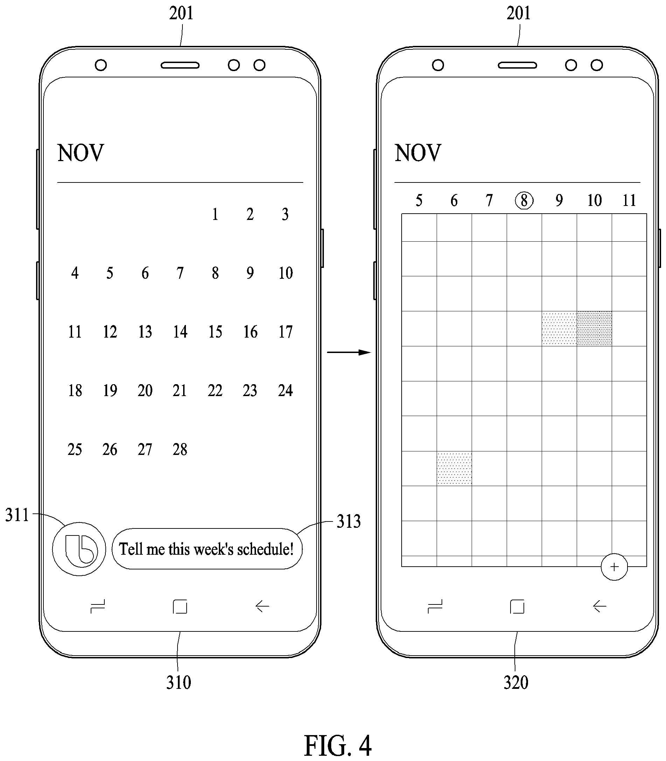

FIG. 4 is a diagram illustrating example screens showing an electronic device processing a received voice input through an intelligent app according to an embodiment of the disclosure.

The electronic device 201 may execute an intelligent app to process a user input through an intelligent server (e.g., the intelligent server 200 of FIG. 2).

Referring to FIG. 4, according to an embodiment, on a first screen 310, when recognizing a predetermined voice input (e.g., Wake up!) or receiving an input through a hardware key (e.g., a dedicated hardware key), the electronic device 201 may execute an intelligent app for processing the voice input. For example, the electronic device 201 executes the intelligent app during the execution of a scheduling app. The electronic device 201 may display an object (e.g., an icon) 311 corresponding to the intelligent app on a display module (e.g., the display module 204 of FIG. 2). The electronic device 201 may receive the voice input corresponding to a user utterance. For example, the electronic device 201 receives a voice input "Tell me this week's schedule!." The electronic device 201 may display, on the display module 204, a user interface (UI) 313 (e.g., an input window) of the intelligent app on which text data of the received voice input is displayed.

On a second screen 320, the electronic device 201 may display, on the display module 204, a result corresponding to the received voice input. For example, the electronic device 201 receives a plan corresponding to the received user input and display, on the display module 204, "this week's schedule" according to the plan.

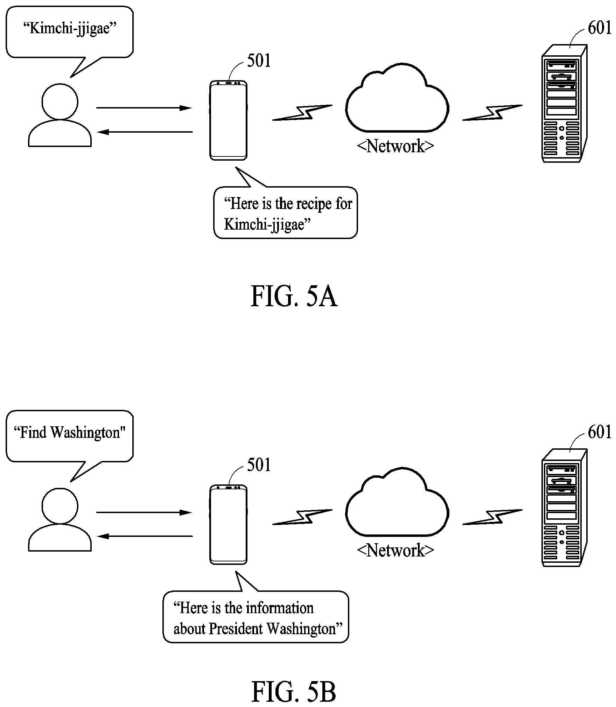

FIGS. 5A and 5B are diagrams illustrating an example of processing a user's utterance by an electronic device according to embodiments of the disclosure.

Referring to FIGS. 5A and 5B, according to an embodiment, an electronic device 501 may include at least some of the components of the electronic device 101 described above with reference to FIG. 1 and at least some of the components of the electronic device 201 described above with reference to FIG. 2. An intelligent server 601 may include at least some of the components of the intelligent server 200 described above with reference to FIG. 2. Thus, what has been described above regarding the electronic device 501 and the intelligent server 601 with reference to FIGS. 1 to 4 will not be repeated here for conciseness.

The electronic device 501 (e.g., the electronic device 101 of FIG. 1 or the electronic device 201 of FIG. 2) and the intelligent server 601 (e.g., the intelligent server 200 of FIG. 2) may be connected through, for example, a local area network (LAN), a wide area network (WAN), a value-added network (VAN), a mobile radio communication network, a satellite communication network, or a combination thereof. The electronic device 501 and the intelligent server 601 may communicate with each other through wired communication or wireless communication (e.g., wireless LAN (e.g., Wi-Fi), Bluetooth, Bluetooth low energy (BLE), ZigBee, Wi-Fi direct (WFD), ultra-wideband (UWB), infrared data association (IrDA), and near-field communication (NFC)).

The electronic device 501 may be implemented as at least one of, for example, a smartphone, a tablet personal computer (PC), a mobile phone, a speaker (e.g., an AI speaker), a video phone, an e-book reader, a desktop PC, a laptop PC, a netbook computer, a workstation, a server, a personal digital assistant (PDA), a portable multimedia player (PMP), a moving picture experts group layer-3 (MP3) player, a mobile medical device, a camera, or a wearable device.

According to an embodiment, the electronic device 501 may obtain voice data from an utterance of a user and transmit the voice data to the intelligent server 601. The voice data may be a computer-readable text obtained through a conversion of a voice part of the utterance by performing automatic speech recognition (ASR) on the utterance. The intelligent server 601 may analyze the utterance using the voice data and provide a device (e.g., the electronic device 501) with a response (e.g., a question and an answer) to be provided to the user, using an analysis result (e.g., at least one of intent information, entity, or capsule) of the analyzing. The intelligent server 601 may be implemented as software. A portion or entirety of the intelligent server 601 may be implemented in at least one of the electronic device 501 or the intelligent server 601 (e.g., the intelligent server 200 of FIG. 2). On-device AI for processing an utterance without communication with the intelligent server 601 may be included in the electronic device 501. As described above with reference to FIGS. 2 to 4, a natural language platform (e.g., the natural language platform 220 of FIG. 2) or the like may be implemented in the electronic device 501. Hereinafter, descriptions will be provided under the assumption that the electronic device 501 performs the operations described herein.

According to an embodiment, the electronic device 501 may obtain intent information corresponding the utterance of the user through an NLU module (e.g., the NLU module 223 of FIG. 2). The intent information may be information indicating an intent of the user that is determined through the analysis of text data. The intent information may include information indicating an operation or function the user desires to execute using a device. The electronic device 501 may calculate a reliability of the intent information corresponding to the utterance of the user. As the reliability increases, it may be determined that an intent information acquisition module (e.g., the NLU module 223 of FIG. 2) accurately estimates an intent of the user corresponding to the utterance.

According to an embodiment, the electronic device 501 may generate one or more augmented sentence candidates based on an utterance of a user with an unclear intent (e.g., an utterance including only a noun or a predicate and an utterance including a homonym) using one or more language models (e.g., a first language model which is at least one of a basic language model, a second language model generated based on learning data for each domain, a third language model generated based on a user history, a fourth language model generated with a social trend reflected therein, or a fifth language model generated with at least two of the first through fourth language models combined), and provide a response to the user based on the augmented sentence candidates. A reliability of intent information corresponding to each of the augmented sentence candidates may be greater than a threshold value.

Referring to FIG. 5A, according to an embodiment, the electronic device 501 may receive an utterance (e.g., "Kimchi-jjigae," translated as Kimchi stew) from a user. The utterance may include only a noun (e.g., Kimchi-jjigae), and a reliability (e.g., a probability value) of intent information corresponding to the utterance may be less than a threshold value (e.g., approximately 80 to 90%). The electronic device 501 may generate one or more augmented sentence candidates (e.g., "What is Kimchi-jjigae?," "Tell me the recipe for Kimchi jjigae," "Tell me the ingredients for Kimchi-jjigae," and "Tell me about the presence of Kimchi-jjigae") including at least a portion (e.g., Kimchi-jjigae) of the utterance based on one or more language models. The electronic device 501 may generate a response to be provided to the user based on the augmented sentence candidates. For example, the electronic device 501 generates the response (e.g., "Here is the recipe for Kimchi-jjigae") based on an augmented sentence (e.g., "Tell me the recipe for Kimchi-jjigae) selected from among the augmented sentence candidates. The electronic device 501 may provide the response to the user by externally outputting a voice signal generated inside the electronic device 501 using a speaker (e.g., the sound output module 155 of FIG. 1 or the speaker 205 of FIG. 2).

Referring to FIG. 5B, according to an embodiment, the electronic device 501 may receive an utterance (e.g., "Fine Washington") from a user. The utterance may include a homonym (e.g., Washington), and a reliability of intent information corresponding to the utterance may be less than the threshold value. The electronic device 501 may generate one or more augmented sentence candidates (e.g., "Find President Washington," "Find Washington D.C.," and "Find Washington on the contact list") including at least a portion (e.g., Washington) of the utterance based on the one or more language models. The electronic device 501 may generate a response (e.g., "Here is the information about President Washington") based on an augmented sentence (e.g., "Find President Washington") selected from among the augmented sentence candidates. The electronic device 501 may provide the response to the user by externally outputting a voice signal generated inside the electronic device 501 using a speaker (e.g., the sound output module 155 of FIG. 1 or the speaker 205 of FIG. 2).

According to an embodiment, some or all of the operations performed by the electronic device 501 may be performed by at least one of the electronic device 501 or the intelligent server 601. Hereinafter, descriptions will be provided under the assumption that the electronic device 501 performs the operations described herein.

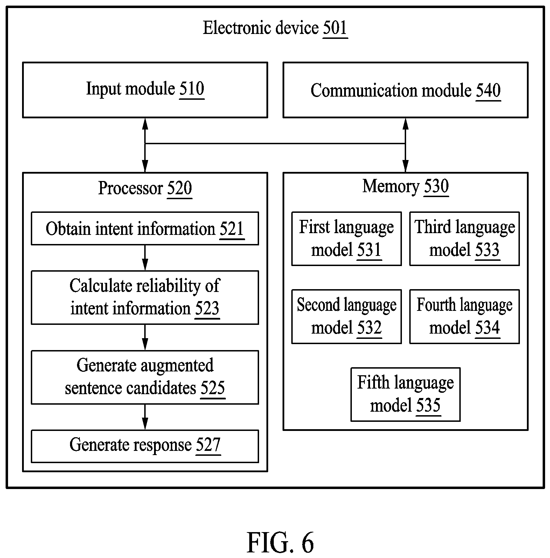

FIG. 6 is a block diagram illustrating an example electronic device according to an embodiment of the disclosure.

Referring to FIG. 6, according to an embodiment, the electronic device 501 may include at least some of the components of the electronic device 101 described above with reference to FIG. 1 and at least some of the components of the electronic device 201 described above with reference to FIG. 2. As described above, on-device AI that may process an utterance without communication with an intelligent server (e.g., the intelligent server 200 of FIG. 2 and the intelligent server 601 of FIGS. 5A and 5B) may be provided in the electronic device 501. As described above with reference to FIGS. 1 to 4, a natural language platform (e.g., 220) and a capsule DB (e.g., 230) may be implemented in the electronic device 501. Thus, what has been described above regarding the electronic device 501 with reference to FIGS. 1 to 4 will not be repeated here for conciseness. The electronic device 501 may include an input module 510 (e.g., the input module 150 of FIG. 1), a processor 520 (e.g., the processor 120 of FIG. 1 and the processor 203 of FIG. 2), a memory 530 (e.g., the memory 130 of FIG. 1 and the memory 207 of FIG. 2) electrically connected to the processor 520, and a communication module 540 (e.g., the communication module 190 of FIG. 1).

The input module 510 may receive a user input (e.g., an utterance) to be processed in a component (e.g., the processor 520) of the electronic device 501 from the outside (e.g., a user) of the electronic device 501. The input module 510 may include a microphone (e.g., the microphone 206 of FIG. 2).

The processor 520 (e.g., an application processor) may access the memory 530 to execute instructions. The processor 520 may perform operations for providing a response to the user. The processor 520 may generate voice data corresponding to an utterance of the user. The processor 520 may convert the voice data into text data.

According to an embodiment, operations 521 to 527 described below may be performed by the processor 520 of the electronic device 501. The operations may be performed in sequential order but not be necessarily performed in sequential order. For example, the order of the operations may change, or at least two of the operations may be performed in parallel.

In operation 521, the processor 520 may obtain intent information corresponding to an utterance (e.g., a user's utterance obtained through a conversion into the form of text) of a user. The intent information may be information indicating an intent of the user determined through the interpretation of text data and may include information indicating an operation or function the user desires to execute using a device. As on-device AI is provided in the electronic device 501, an intent information acquisition module (e.g., the NLU module 223 of FIG. 2) may be implemented in the electronic device 501.

In operation 523, the processor 520 may calculate a reliability (e.g., a probability value) of the intent information. As the reliability increases, the processor 520 may determine that the intent information acquisition module (e.g., the NLU module 223) accurately estimates an intent of the user corresponding to the utterance.

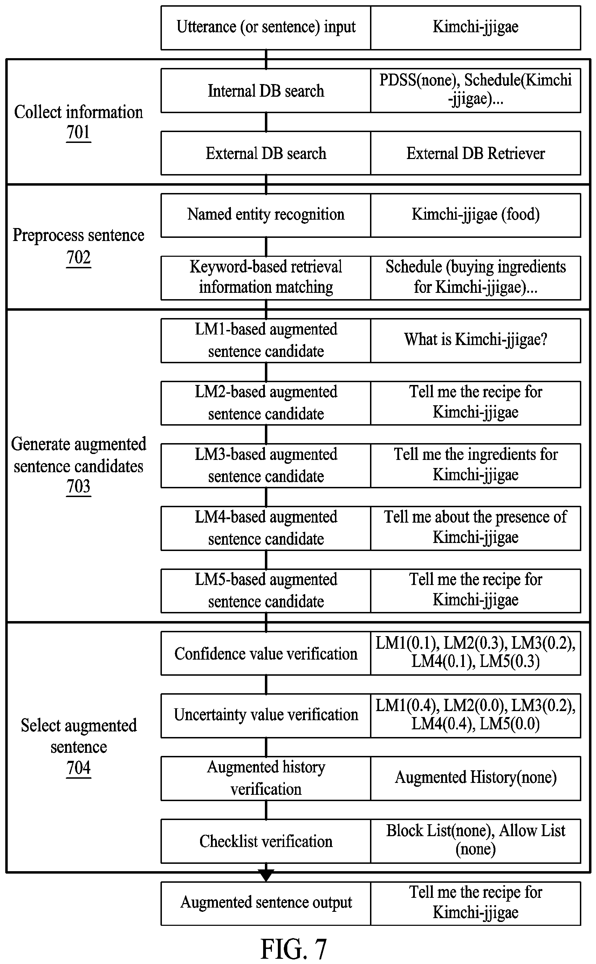

In operation 525, in response to the reliability being less than a threshold value (e.g., approximately 80 to 90%), the processor 520 may generate one or more augmented sentence candidates. The processor 520 may generate the augmented sentence candidates including at least a portion of the utterance based on one or more language models (e.g., a first language model 531, a second language model 532, a third language model 533, a fourth language model 534, and/or a fifth language model 535) stored in the memory 530. A reliability of intent information corresponding to each of the augmented sentence candidates may be greater than the threshold value. This operation of generating augmented sentence candidates by the processor 520 will be described in detail below with reference to FIG. 7.

In operation 527, the processor 520 may generate a response to be provided to the user based on the augmented sentence candidates. By providing the response to the user based on the augmented sentence candidates, the electronic device 501 may improve the performance allowing the user to experience satisfaction with a service (e.g., a performed task).

According to an embodiment, the memory 530 may store various pieces of data used by at least one component (e.g., the processor 520) of the electronic device 501. For example, the memory 530 may store the first language model 531, the second language model 532, the third language model 533, the fourth language model 534, and/or the fifth language model 535. The data and/or instructions stored in the memory 530 may be stored in the intelligent server (e.g., the intelligent server 200 of FIG. 2 or the intelligent server 601 of FIGS. 5A and 5B).

According to an embodiment, the communication module 540 may communicate with the intelligent server 601. The communication module 540 may transmit, to the intelligent server 601, an utterance received from the user and/or a sentence obtained in response to the utterance. In a case in which the on-device AI is provided in the electronic device 501 and functions of the intelligent server 601 are implemented in the electronic device 501, only some of the functions of the intelligent server 601 may be implemented in the electronic device 501. Some (e.g., an operation of converting voice data corresponding to an utterance into text data) or all of the operations performed in the electronic device 501 may be performed by the electronic device 501 and/or the intelligent server 601, and the communication module 540 may receive a result of processing the utterance by the intelligent server 601.

FIG. 7 is a diagram illustrating an example operation method of an electronic device according to an embodiment of the disclosure.

Referring to FIG. 7, according to an embodiment, a processor (e.g., the processor 520 of FIG. 6) may obtain intent information corresponding to an utterance (e.g., "Kimchi-jjigae") of a user. The processor 520 may calculate a reliability of the intent information and generate one or more augmented sentence candidates including at least a portion of the utterance when the reliability is less than a threshold value. Hereinafter, this operation of generating augmented sentence candidates will be described in detail.

Operations 701 to 704 described below may be performed by a processor (e.g., the processor 520 of FIG. 6) of an electronic device (e.g., the electronic device 501 of FIG. 6). The operations may be performed in sequential order but not be necessarily performed in sequential order. For example, the order of the operations changes, and at least two of the operations may be performed in parallel.

In operation 701, the processor 520 may obtain information associated with an utterance (e.g., a sentence) obtained through a conversion into the form of text. The processor 520 may collect such utterance-related information from an internal DB or an external DB. The internal DB may include a DB stored in the electronic device 501, for example, a personal data sync service (PDSS), contacts, and a file DB. The information collected from the internal DB may include information in the form of text. The information collected from the external DB may include Wiki data retrieved by an utterance or a keyword and keyword-based retrieval information such as Internet search results. The processor 502 may not collect any information through the PDSS. The processor 520 may collect information associated with Kimchi-jjigae through a schedule domain.

In operation 702, the processor 520 may perform preprocessing associated with augmented sentence candidates. For example, the processor 520 preprocesses the utterance obtained through the conversion into the form of text based on the obtained information. The preprocessing may include an operation of performing named entity recognition on the utterance and an operation of matching a named entity and information (e.g., the information obtained in operation 521). The named entity recognition may be recognizing and extracting, from the utterance, the named entity, such as, for example, a predefined person, company, location, time, unit, and the like. The extracted named entity may be classified into categories of person, location, organization, time, or the like. The processor 520 may perform the named entity recognition (e.g., Kimchi-jjigae (food)) on the utterance (e.g., Kimchi-jjigae). The processor 520 may match (e.g., a schedule (buying ingredients for Kimchi-jjigae) the named entity and the information (e.g., the information associated with the schedule domain).

In operation 703, the processor 520 may generate one or more augmented sentence candidates using a result of the preprocessing (e.g., a result of the matching) and one or more language models (e.g., the first language model 531, the second language model 532, the third language model 533, the fourth language model 534, and/or the fifth language model 535). The first language model 531 may be a basic language model, and the processor 520 may generate an augmented sentence candidate (e.g., "What is Kimchi-jjigae?") based on the first language model 531. The second language model 532 may be generated based learning data for each domain (e.g., a smart recipe), and the processor 520 may generate an augmented sentence candidate (e.g., "Tell me the recipe for Kimchi-jjigae") based on the second language model 532. The third language model 533 may be generated based on a user history (e.g., a user's utterance history, a user's search history, and a user DB), and the processor 520 may generate an augmented sentence candidate (e.g., "Tell me the ingredients for Kimchi-jjigae") based on the third language model 533. The fourth language model 534 may be generated by applying a social trend thereto (e.g., by updating information of a search engine, a ranking engine, and the like (e.g., rapidly changing information) at short intervals), and the processor 520 may generate an augmented sentence candidate (e.g., "Tell me about the presence of Kimchi") based on the fourth language model 534. The fifth language model 535 may be generated by a combination of at least two language models among the first language model 531, the second language model 532, the third language model 533, and the fourth language model 534, and the processor 520 may generate an augmented sentence candidate (e.g., "Tell me the recipe for Kimchi-jjigae") based on the fifth language model 535.

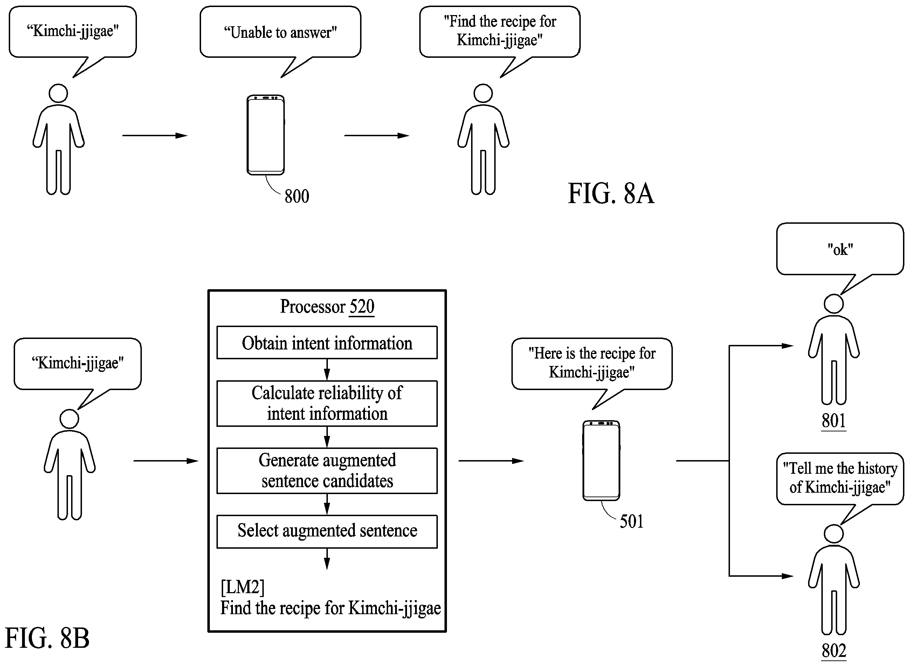

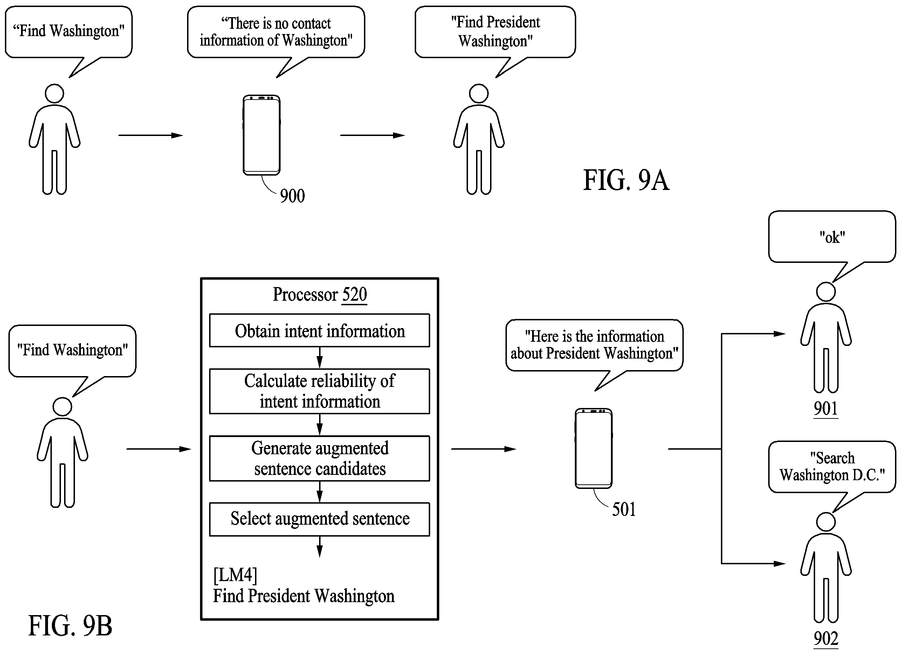

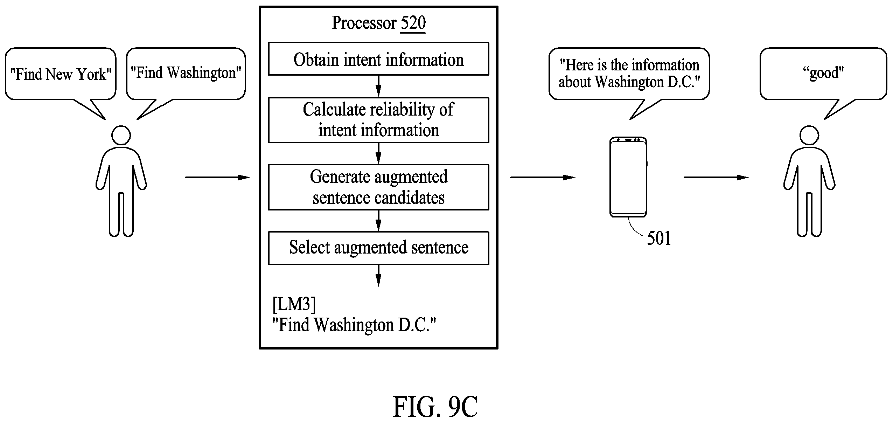

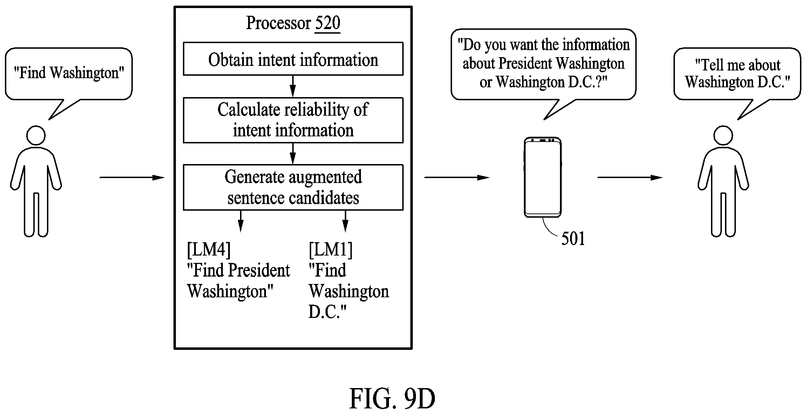

In operation 704, the processor 520 may select at least one augmented sentence from among the one or more augmented sentence candidates. The processor 520 may verify a confidence value for each of the augmented sentence candidates. The confidence value may be a numerical representation of the degree of confidence an intent information acquisition module (e.g., the NLU module 223 of FIG. 2) has when obtaining the intent information. The confidence value may also be represented as a probability, and a sum of respective confidence values of the augmented sentence candidates may be 1. For example, a confidence value of an augmented sentence candidate generated based on a first language model may be 0.1, and a confidence value of an augmented sentence candidate generated based on a second language model may be 0.3. In this example, the processor 520 may select an augmented sentence candidate having a greater confidence value, and the augmented sentence candidate generated based on the second language model may thus have a greater probability of being selected than the augmented sentence candidate generated based on the first language model. The processor 520 may verify an uncertainty value for each of the augmented sentence candidates. The uncertainty value may be a value obtained based on a Bayesian model. The uncertainty value may also be represented as a probability, and a sum of respective uncertainty values of the augmented sentence candidates may be 1. For example, an uncertainty value of the augmented sentence candidate generated based on the first language model may be 0.4, and the augmented sentence candidate generated based on the second language model may be 0.0. In this example, the processor 520 may select an augmented sentence candidate having a smaller uncertainty value, and the augmented sentence candidate generated based on the second language model may thus have a greater probability of being selected than the augmented sentence candidate generated based on the first language model. In addition, the processor 520 may verify an augmentation history and/or verify a checklist (e.g., a blocklist and an allowlist) to select a most suitably augmented sentence. The processor 520 may output the augmented sentence (e.g., "Tell me the recipe for Kimchi-jjigae") obtained through such an augmented sentence selection operation. The sentence selection operation may be performed or may not be performed. For example, in a case in which the sentence selection operation is performed, the processor 520 may output a response generated based on the augmented sentence to the user (refer to FIGS. 8B, 9B, and 9C). For another example, in a case in which the sentence selection operation is not performed, the processor 520 may output a question generated based on a plurality of augmented sentence candidates to the user (refer to FIG. 9D).

According to an embodiment, the processor 520 may generate one or more augmented sentence candidates from an utterance having an unclear intent (e.g., an utterance of which corresponding intent information has a reliability less than a threshold value) based on one or more language models (e.g., a language model with a user history reflected therein and a language model with a social trend reflected therein), and provide a response to a user based on the augmented sentence candidates. The electronic device 501 may perform a task corresponding to the utterance and may also output the response generated based on an augmented sentence to the user, thereby assisting the user in understanding the performed task. The processor 520 may output, to the user, the response generated based on a sentence (e.g., the augmented sentence) selected from among the augmented sentence candidates and may thereby improve the performance associated with a user's experience of satisfaction with a service (e.g., the performed task).

FIGS. 8A and 8B are diagrams illustrating an example of processing a user's utterance by an electronic device according to embodiments of the disclosure.

Referring to FIG. 8A, when receiving an utterance (e.g., an utterance including only a noun, e.g., "Kimchi-jjigae") having an unclear intent from a user, an electronic device 800 may not accurately determine an utterance intent corresponding to the utterance. For example, in this case, a reliability of intent information corresponding to the utterance may be less than a threshold value. The electronic device 800 may not be able to provide a desired response to the user. In this case, the user who does not receive the desired response may need to utter again, for example, "Find the recipe for Kimchi-jjigae."

Referring to FIG. 8B, according to an embodiment, when receiving an utterance (e.g., "Kimchi-jjigae") having an unclear intent from a user, a processor (e.g., the processor 520 of FIG. 6) of an electronic device (e.g., the electronic device 501 of FIG. 6) may generate one or more augmented sentence candidates (e.g., "What is Kimchi-jjigae?," "Find me the recipe for Kimchi-jjigae," "Tell me the ingredients for Kimchi-jjigae," and "Tell me about the presence of Kimchijjigae") including at least a portion (e.g., Kimchi-jjigae) of the utterance based on one or more language models. The processor 520 may select at least one augmented sentence (e.g., "Fine me the recipe for Kimchi-jjigae") from among the augmented sentence candidates. The electronic device 501 may output a response (e.g., "Here is the recipe for Kimchi-jjigae") generated based on the augmented sentence. For example, the electronic device 501 may externally output a voice signal generated inside the electronic device 501 using a speaker (e.g., the sound output module 155 of FIG. 1 or the speaker 205 of FIG. 2). In a case 801 in which a command intended by the user and a task performed by the electronic device 501 match each other, the user may satisfy with a result of the task performed by the electronic device 501. In a case 802 in which a command intended by the user and a task performed by the electronic device 501 do not match each other, the user may utter again (e.g., "Tell me the history of Kimchi-jjigae") such that an intent of the utterance is clearly delivered. The electronic device 501 may perform a task (e.g., outputting information on the recipe for Kimchi-jjigae) corresponding to the utterance and may also output, to the user, a response (e.g., "Here is the recipe for Kimchi-jjigae") generated based on the augmented sentence, thereby assisting the user in understanding the performed task and guiding the user to utter an accurate utterance.

FIGS. 9A, 9B, 9C, and 9D are diagrams illustrating an example of processing a user's utterance by an electronic device according to embodiments of the disclosure.

Referring to FIG. 9A, when receiving an utterance (e.g., an utterance including a homonym, e.g., "Find Washington") having an unclear utterance intent from a user, an electronic device 900 may perform a task based on intent information having a relatively low reliability, the user who has not received a desired task may need to utter again (e.g., "Find President Washington."

Referring to FIG. 9B, when receiving an utterance (e.g., "Find Washington") having an unclear utterance intent from a user, a processor (e.g., the processor 520 of FIG. 6) of an electronic device (e.g., the electronic device 501 of FIG. 6) may generate one or more augmented sentence candidates (e.g., "Find President Washington," "Find Washington D.C.," and "Find Washington on the contact list") including at least a portion (e.g., Washington) of the utterance based on one or more language models. The processor 520 may select at least one augmented sentence (e.g., "Find President Washington ") from among the augmented sentence candidates. For example, the processor 520 may select, as the augmented sentence, an augmented sentence candidate generated based on a fourth language model (e.g., a language model with a social trend reflected therein, and in this example, there is a high search volume for President Washington as an anniversary of his death approaches). The electronic device 501 may output a response (e.g., "Here is the information about President Washington") generated based on the augmented sentence (e.g., "Find President Washington"). For example, the electronic device 501 may externally output a voice signal generated inside the electronic device 501 using a speaker (e.g., the sound output module 155 of FIG. 1 or the speaker 205 of FIG. 2). In a case 901 in which a command intended by the user and a task performed by the electronic device 501 match each other, the user may satisfy with a result of the task performed by the electronic device 501. In a case 902 in which the command intended by the user and the task performed by the electronic device 501 do not match each other, the user may need to utter again (e.g., "Search for Washington D.C.") such that an utterance intent is clearly delivered.

Referring to FIG. 9C, the processor 520 may receive continuous utterances (e.g., "Find Washington" after "Find New York") from a user. In a case in which determining that a reliability of intent information corresponding to a following utterance (e.g., "Find Washington") is less than a threshold value, the processor 520 may generate one or more augmented sentence candidates (e.g., "Find President Washington," "Find Washington D.C.," and "Find Washington on the contact list") including at least a portion (e.g., Washington) of the utterance based on one or more language models. The processor 520 may select at least one augmented sentence (e.g., "Find Washington D.C.") from among the augmented sentence candidates. For example, the processor 520 may select, as the augmented sentence, an augmented sentence candidate generated based on a third language model (e.g., a language model with a user history reflected therein, in this example, the user may previously utter to search for the city of New York). The electronic device 501 may output a response (e.g., "Here is the information about Washington D.C.") generated based on the augmented sentence (e.g., "Find Washington D.C.") that is a most suitable sentence. For example, the electronic device 501 may externally output a voice signal generated inside the electronic device 501 using a speaker (e.g., the sound output module 155 of FIG. 1 or the speaker 205 of FIG. 2).

Referring to FIG. 9D, the processor 520 may output a question generated based on a plurality of augmented sentence candidates without selecting an augmented sentence from among augmented sentence candidates. For example, when receiving an utterance (e.g., "Find Washington") having an unclear utterance intent from a user, the processor 520 may generate one or more augmented sentence candidates (e.g., "Find President Washington" and "Find Washington D.C.") including at least a portion of the utterance based on one or more language models. The electronic device 501 may output a question (e.g., "Do you want the information about President Washington? Do you want the information about Washington D.C.?") generated based on the augmented sentence candidates. For example, the electronic device 501 may externally output a voice signal generated inside the electronic device 501 using a speaker (e.g., the sound output module 155 of FIG. 1 or the speaker 205 of FIG. 2). The user may then more accurately utter a command (e.g., "Tell me about Washington D.C.") intended by the user in response to the question output from the electronic device 501.

According to an embodiment, the electronic device 501 may perform a task corresponding to an utterance of a user and may also output, to the user, a response (e.g., a question generated based on a plurality of augmented sentence candidates or a response generated based on a most suitably augmented sentence) generated based on augmented sentence candidates, thereby assisting the user in understanding the performed task and guiding the user to utter an accurate utterance. Even when receiving a user's utterance having an unclear utterance intent, the electronic device 501 may provide a response and improve the performance associated with a user's experience of satisfaction with a service (e.g., the performed task).

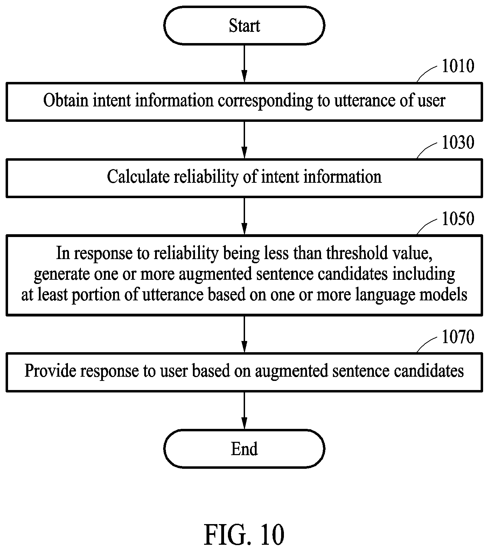

FIG. 10 is a flowchart illustrating an example operation method of an electronic device according to an embodiment of the disclosure.

Operations 1010 to 1070 described below may be performed in sequential order but not be necessarily performed in sequential order. For example, the order of operations 1010 to 1070 may change, and at least two of them may be performed in parallel.

In operation 1010, a processor (e.g., the processor 520 of FIG. 6) may obtain intent information corresponding to an utterance of a user.

In operation 1030, the processor 520 may calculate a reliability of the intent information.

In operation 1050, in response to the reliability being less than a threshold value, the processor 520 may generate one or more augmented sentence candidates including at least a portion of the utterance based on one or more language models.

In operation 1070, the processor 520 may provide a response to the user based on the augmented sentence candidates. For example, the processor 520 may output, to the user, a response generated based on a sentence (e.g., an augmented sentence) selected from among the augmented sentence candidates. For another example, the processor 520 may output a question generated based on a plurality of augmented sentence candidates to the user.

According to an embodiment, an electronic device (e.g., the electronic device 501 of FIG. 5A) may include a memory including instructions and a processor electrically connected to the memory and configured to execute the instructions. In a case in which the instructions are executed by the processor, the processor may obtain intent information corresponding to an utterance of a user, calculate a reliability of the intent information, generate one or more augmented sentence candidates including at least a portion of the utterance using one or more language models in response to the reliability being less than a threshold value, and provide a response to the user based on the augmented sentence candidates.

The reliability may be less than the threshold value when the utterance includes only a noun or a predicate.

The reliability may be less than the threshold value when the utterance includes a homonym.

The one or more language models may include at least one of a first language model which is a basic language model, a second language model generated based on learning data for each domain, a third language model generated based on a user history, or a fourth language model generated with a social trend reflected therein.

The one or more language models may include a fifth language model generated by a combination of two or more language models among the first language model, the second language model, the third language model, and the fourth language model.

A reliability of intent information corresponding to each of the one or more augmented sentence candidates may be greater than the threshold value.

The processor may obtain information associated with the utterance, preprocess an utterance obtained through a conversion into the form of text based on the information, and generate the one or more augmented sentence candidates based on a result of the preprocessing and the one or more language models.

The processor may output a question generated based on a plurality of augmented sentence candidates.

The processor may select at least one augmented sentence from among the one or more augmented sentence candidates, and output the response generated based on the at least one augmented sentence.

For each of the one or more augmented sentence candidates, the processor may select the at least one augmented sentence by verifying a confidence value, verifying an uncertainty value, verifying an augmented history, or verifying a checklist.

According to an embodiment, an operation method of an electronic device (e.g., the electronic device 501 of FIG. 5A) may include obtaining intent information corresponding to an utterance of a user, calculating a reliability of the intent information, generating one or more augmented sentence candidates including at least a portion of the utterance based on one or more language models in response to the reliability being less than a threshold value, and providing a response to the user based on the augmented sentence candidates.

The reliability may be less than the threshold value when the utterance includes only a noun or a predicate.

The reliability may be less than the threshold value when the utterance includes a homonym.

The one or more language models may include at least one of a first language model which is a basic language model, a second language model generated based on learning data for each domain, a third language model generated based on a user history, or a fourth language model generated with a social trend reflected therein.

The one or more language models may include a fifth language model generated by a combination of two or more language models among the first language model, the second language model, the third language model, and the fourth language model.

A reliability of intent information corresponding to each of the one or more augmented sentence candidates may be greater than the threshold value.

The generating may include obtaining information associated with the utterance, preprocessing an utterance obtained through a conversion into the form of text based on the information, and generating the one or more augmented sentence candidates based on a result of the preprocessing and the one or more language models.

The providing may include outputting a question generated based on a plurality of augmented sentence candidates.

The providing may include selecting at least one augmented sentence from among the one or more augmented sentence candidates, and outputting the response generated based on the at least one augmented sentence.

For each of the one or more augmented sentence candidates, the selecting may include at least one of verifying a confidence value, verifying an uncertainty value, verifying an augmented history, or verifying a checklist.

According to embodiments described herein, an electronic device may be a device of one of various types. The electronic device may include, as non-limiting examples, a portable communication device (e.g., a smartphone, etc.), a computing device, a portable multimedia device, a portable medical device, a camera, a wearable device, or a home appliance. However, the electronic device is not limited to the examples described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Terms such as "first," "second," or "initial" or "next" or "subsequent" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Embodiments set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a complier or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to embodiments, a method according to an embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}) or between two user devices (e.g., smart phones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to embodiments thereof, it will be understood by those skilled in the art that various changes in form and details may be made therein without departing from the spirit and scope of the disclosure as defined by the appended claims and their equivalents.

## Claims

1. An electronic device, comprising:
a memory comprising instructions; and
at least one processor electrically connected to the memory and configured to execute the instructions,
wherein, when the instructions are executed by the at least one processor, the at least one processor is configured to:
obtain intent information corresponding to an utterance of a user,
calculate a reliability of the intent information,
in response to the reliability being less than a threshold value, generate one or more augmented sentence candidates comprising at least a portion of the utterance based on one or more language models, and
provide a response to the user based on the augmented sentence candidates.

2. The electronic device of claim 1, wherein the reliability is less than the threshold value when the utterance includes only a noun or a predicate.

3. The electronic device of claim 1, wherein the reliability is less than the threshold value when the utterance includes a homonym.

4. The electronic device of claim 1, wherein the one or more language models comprise at least one of:
a first language model which is a basic language model,
a second language model generated based on learning data for each domain,
a third language model generated based on a user history, or
a fourth language model generated with a social trend reflected therein.

5. The electronic device of claim 4, wherein the one or more language models comprise:
a fifth language model generated by a combination of two or more language models among the first language model, the second language model, the third language model, and the fourth language model.

6. The electronic device of claim 1, wherein a reliability of intent information corresponding to each of the one or more augmented sentence candidates is greater than the threshold value.

7. The electronic device of claim 1, wherein the at least one processor is configured to:
obtain information associated with the utterance,
preprocess an utterance obtained through a conversion into a form of text based on the information, and
generate the one or more augmented sentence candidates based on a result of the preprocessing and the one or more language models.

8. The electronic device of claim 1, wherein the at least one processor is further configured to:
output a question generated based on a plurality of augmented sentence candidates.

9. The electronic device of claim 1, wherein the at least one processor is further configured to:
select at least one augmented sentence from among the one or more augmented sentence candidates, and
output the response generated based on the at least one augmented sentence.

10. The electronic device of claim 9, wherein the at least one processor is further configured to:
for each of the one or more augmented sentence candidates, select the at least one augmented sentence by verifying a confidence value, verifying an uncertainty value, verifying an augmented history, or verifying a checklist.

11. An operation method of an electronic device, comprising:
obtaining intent information corresponding to an utterance of a user;
calculating a reliability of the intent information;
in response to the reliability being less than a threshold value, generating one or more augmented sentence candidates comprising at least a portion of the utterance based on one or more language models; and
providing a response to the user based on the augmented sentence candidates.

12. The operation method of claim 11, wherein the reliability is less than the threshold value when the utterance includes only a noun or a predicate.

13. The operation method of claim 11, wherein the reliability is less than the threshold value when the utterance includes a homonym.

14. The operation method of claim 11, wherein the one or more language models comprise at least one of:
a first language model which is a basic language model;
a second language model generated based on learning data for each domain;
a third language model generated based on a user history; or
a fourth language model generated with a social trend reflected therein.

15. The operation method of claim 14, wherein the one or more language models comprise:
a fifth language model generated by a combination of two or more language models among the first language model, the second language model, the third language model, and the fourth language model.
